(19) Europäisches Patentamt
European Patent Office
Office européen des brevets

(11) **EP 3 182 088 B1**

(12) **EUROPÄISCHE PATENTSCHRIFT**

(45) Veröffentlichungstag und Bekanntmachung des Hinweises auf die Patenterteilung:
**30.01.2019 Patentblatt 2019/05**

(51) Int Cl.:
***G01M 17/007*** *(2006.01)*

(21) Anmeldenummer: **16204626.2**

(22) Anmeldetag: **16.12.2016**

(54) **VERFAHREN ZUR FUNKTIONSPRÜFUNG VON SCHWIMMPLATTEN ALS BESTANDTEIL EINES FAHRZEUGPRÜFSTANDES**

METHOD FOR CHECKING THE OPERATION OF FLOATING PLATES AS PART OF A VEHICLE TEST STAND

PROCÉDÉ DE CONTRÔLE DE FONCTIONNEMENT DE PLAQUES FLOTTANTES FAISANT PARTIE INTÉGRANTE D'UN BANC D'ESSAI DE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.12.2015 DE 102015122277**

(43) Veröffentlichungstag der Anmeldung:
**21.06.2017 Patentblatt 2017/25**

(73) Patentinhaber: **Dürr Assembly Products GmbH**
**66346 Püttlingen (DE)**

(72) Erfinder:
• **Tentrup, Dr. Thomas**
**66663 Merzig-Mechern (DE)**
• **Meyers, Christoph**
**66679 Losheim am See (DE)**
• **Deutsch, André**
**67260 Herbitzheim (FR)**

(74) Vertreter: **Patentanwaltskanzlei Vièl & Wieske PartGmbB**
**Feldmannstraße 110**
**66119 Saarbrücken (DE)**

(56) Entgegenhaltungen:
WO-A1-2009/039575     DE-A1- 4 203 982
DE-A1- 19 836 711     DE-A1-102014 111 192
DE-C2- 2 840 408

**Beschreibung**

Die vorliegende Erfindung betrifft ein Verfahren zur Funktionsprüfung von Schwimmplatten als Bestandteil eines Fahrzeugprüfstandes nach dem Oberbegriff der Ansprüche 1, 3 und 4.

Es sind bereits derartige Fahrzeugprüfstände bekannt, die Radaufnahmen aufweisen, die jeweils Fahrzeugrädern eines Fahrzeugs zugeordnet sind, das sich zur Durchführung von Prüfarbeiten, Einstellarbeiten und/oder von Messarbeiten in dem Fahrzeugprüfstand befindet.

Derartige Radaufnahmen können beispielsweise aus Einzel- oder Doppelrollen oder aus Platten bestehen, die wiederum horizontal schwimmend gelagert sein können.

Bei Fahrwerkständen ist es bekannt, dass die Radaufnahmen aus horizontal schwimmend gelagerten Doppelrollen oder Schwimmplatten bestehen. Hierbei können Winkelencoder vorhanden sein zur Erfassung von Lenkeinschlägen.

Es sind Prüfstände bekannt, bei denen in einer Fahrspur mehrere Radaufhahmen vorhanden sind. Dies ist dann der Fall, wenn im Fahrzeugprüfstand bei einem Fahrzeug Räder mehrerer Achsen vermessen bzw. eingestellt werden sollen.

Um in dem Prüfstand verschiedene Fahrzeugtypen messen bzw. einstellen zu können, kann vorgesehen werden, dass die Abstände dieser Radaufnahmen zueinander veränderbar sind abhängig von den Radständen der Räder des jeweiligen Fahrzeugtyps. Diese Richtung ist in der horizontalen Ebene als X-Richtung definiert. Ebenso kann in diesem Zusammenhang vorgesehen werden, dass die Radaufnahmen zueinander hinsichtlich verschiedener Spurbreiten der Räder von Fahrzeugen einstellbar sind. Dabei kann es sich zum einen um Spurbreiten handeln, die bei unterschiedlichen Fahrzeugtypen verschieden sein können. Ebenso kann damit eine Anpassung des Prüfstandes an ein Fahrzeug vorgenommen werden, bei dem bei den Achsen die Räder dieser verschiedenen Achsen achsweise eine unterschiedliche Spurbreite aufweisen. Die Einstellung hinsichtlich der Spurbreiten ist in der horizontalen Ebene als Y-Richtung definiert.

Die Schwimmplatte ist so aufgebaut, dass diese fahrzeugbezogene Radaufstandsteile aufweist. Hierbei handelt sich um die Doppelrollen, die Platten oder die Einzelrollen, auf denen das jeweilige Rad aufsteht mitsamt der Lagerung insoweit, als die Kombination dieser Teile in der gelösten (d.h. nicht geklemmten) Betriebsstellung der Schwimmplatte und richtig funktionierender Schwimmplatte die Bewegungen des Fahrzeugs in der horizontalen Ebene (X, Y) zumindest nahezu reibungsfrei mitmacht.

Zum Einfahren und Ausfahren des Fahrzeugs aus dem Prüfstand werden die Schwimmplatten in die Betriebsstellung gebracht, in der die Schwimmplatten geklemmt sind. Für die Durchführung der Prüf-, Mess- und Einstellarbeiten befinden sich die Schwimmplatten in der gelösten Betriebsstellung.

Bei einer Schwimmplatte in der gelösten Betriebsstellung sind die fahrzeugbezogenen Radaufstandsteile beweglich auf dem Prüfstandteil der jeweiligen Schwimmplatte gelagert, so dass diese fahrzeugbezogenen Radaufstandsteile im optimalen Fall weitgehend frei von Reibungskräften in der horizontalen Ebene (X, Y) gegenüber den jeweiligen Prüfstandsteilen beweglich sind. Für die ordnungsgemäße Funktion der Schwimmplatte ist ein maximaler Reibungswiderstand definiert, der sich auf ein bestimmtes Aufstandsgewicht bezieht sowie auf die Kraft, die dann maximal benötigt werden darf, um das fahrzeugbezogene Radaufstandsteil gegenüber dem Prüfstandteil der Schwimmplatte horizontal zu bewegen. Entsprechend liegt keine ordnungsgemäße Funktion der Schwimmplatte mehr vor, wenn die erforderliche Kraft zur Bewegung des fahrzeugbezogenen Radaufstandsteil der Schwimmplatte gegenüber dem Prüfstandteil größer ist als die Kraft, die bei dem definierten Aufstandsgewicht dem maximalen Reibbeiwert entspricht.

Aus der DE 28 40 408 C2 ist es bekannt, einen Prüfstand mit einer einzelnen Schwimmplatte zu versehen, bei der das fahrzeugbezogene Radaufstandsteils gegenüber dem Prüfstandteil der Schwimmplatte mittels eines oder mehrerer Antriebe beweglich ist. Diese Beweglichkeit soll über ein Luftpolster reibungsfrei eingestellt werden. Aus den Kräften, die die Antriebe aufbringen in Verbindung mit bestimmten gemessenen Verspannungen im Fahrwerk eines aufstehenden Fahrzeugs lässt sich damit ermitteln, ob das Spiel im Fahrwerk innerhalb vorgegebener Toleranzgrenzen liegt. Voraussetzung ist dabei, dass das fahrzeugbezogene Radaufstandsteil gegenüber dem Prüfstandteil der Schwimmplatte reibungsfrei beweglich ist, so dass die benötigten Kräfte der Antriebe eindeutig den gemessenen Verspannungen des Fahrwerks zugeordnet werden können. Damit beginnt der Gegenstand dieses Patentes bei der Voraussetzung, dass die jeweilige Schwimmplatte störungsfrei funktioniert. Gerade dies soll aber nach der vorliegenden Erfindung überprüft werden.

Die DE 102 17 720 C1 beschreibt einen Gegenstand, der vergleichbar ist zur DE 28 40 408 C2. Auch dort wird davon ausgegangen, dass die Lagerung über das Luftpolster reibungsfrei ist. Eine weitere Untersuchung der Reibungsverhältnisse der Schwimmplatte ist damit nicht mehr erforderlich.

Bei der DE 100 20 450 A1 sind Antriebsmittel für eine Schwimmplatte vorhanden. Es wird zwischen einem aktiven und einem passiven Betriebszustand unterschieden. Im aktiven Betriebszustand sind die Antriebsmittel zu dem beweglichen Teil der Schwimmplatte eingekuppelt, so dass das bewegliche Teil der Schwimmplatte mittels der Antriebsmittel beweglich ist. Im passiven Zustand sind die Antriebsmittel ausgekuppelt. Damit werden die Antriebsmittel in diesem passiven Zustand der Schwimmplatte nicht mitbewegt. Reibungskräfte der Antriebsmittel spielen daher in dem passiven Zustand keine Rolle. Eventuelle Funktionsstörungen der Schwimmplatte selbst bleiben dabei unberücksichtigt.

Aus der DE 10 2009 060 304 A1 ist eine Achsspielprüfeinrichtung bekannt, die für die Räder der zu prüfenden Achse jeweils eine Aufstandsfläche aufweist, die mit Antriebsmitteln in horizontaler Richtung bewegbar ist. Es wird die Kraft bewertet, die benötigt wird, um die Aufstandsfläche um einen bestimmten Betrag auszulenken. Dabei wird wieder vorausgesetzt, dass die Lagerung der Aufstandsfläche reibungsfrei ist. Gerade dies soll nach der vorliegenden Erfindung überprüft werden.

Die DE 10 2014 111 192 A1 und die DE 42 03 982 A1 beschreiben weitere Beispiele für die Verwendung von Schwimmplatten in Fahrzeugprüfständen.

In Kenntnis der vorliegenden Erfindung wird noch auf die DE 198 36 711 A1 verwiesen, aus der es bekannt ist, bei einem Rollenprüfstand eines Fahrzeugs Belastungseinheiten für die Rollen des Rollenprüfstandes vorzusehen, um eine Massensimulation vornehmen zu können bei den Simulationen auf dem Rollenprüfstand. Dabei sollen auch Reibungseffekte berücksichtigt werden. Eine entsprechende Anwendung ist auch aus der WO 2009/039575 A1 bekannt.

Der vorliegenden Erfindung liegt die Aufgabe zu Grunde, ein Verfahren vorzuschlagen, mit dem eine ordnungsgemäße Funktion der Schwimmplatten eines Fahrzeugprüfstandes in möglichst einfacher Weise überprüft werden kann.

Diese Aufgabe wird nach der vorliegenden Erfindung gemäß Anspruch 1 gelöst durch ein Verfahren zur Funktionsprüfung von Schwimmplatten als Bestandteil eines Prüfstandes für Prüf-, Mess- und/oder Einstellarbeiten an einem Fahrzeug. Die Schwimmplatten weisen jeweils ein fahrzeugbezogenes Radaufstandsteil auf, das zumindest in einer gelösten Betriebsstellung der Schwimmplatte gegenüber einem Prüfstandteil der einzelnen Schwimmplatte beweglich ist. Nach der vorliegenden Erfindung wird bei gelöster Betriebsstellung der Schwimmplatte und bei einem im Prüfstand auf den Schwimmplatten aufstehenden Fahrzeug das Fahrzeug mitsamt den fahrzeugbezogenen Radaufstandsteilen der Schwimmplatten mittels Einstellmitteln bewegt. Dabei wird die Kraft erfasst und bewertet, die zur Bewegung des Fahrzeugs mitsamt den fahrzeugbezogenen Radaufstandsteilen der Schwimmplatten erforderlich ist.

Das Fahrzeug kann mittels der Einstellmittel zur Funktionsprüfung der Schwimmplatten in Querrichtung zum Fahrzeug (y-Richtung) bewegt werden, in Längsrichtung des Fahrzeugs (x-Richtung) oder auch in einer Richtung, die eine Komponente in y-Richtung enthält sowie eine Komponente in x-Richtung).

Indem die Funktionsprüfung der Schwimmplatte vorgenommen wird, wenn ein Fahrzeug als "Prüfgewicht" auf den Schwimmplatten aufsteht, wird die Funktionsprüfung besonders einfach und ohne großen Aufwand durchführbar. Insbesondere ist es nicht erforderlich, ein besonderes "Referenzgewicht" für die Durchführung von Prüfvorgängen bereitzuhalten.

Die Kraft, um ein Fahrzeug auf den Schwimmplatten im Zustand "frei" zu bewegen, ist

$$F = \sum_{i=1}^{4} \mu_i * G_i \quad ,$$

wobei

➤ $\mu_i$ der Reibungskoeffizient der Schwimmplatte i ist

➤ und $G_i = m_i * g$ die Gewichtskraft ist, die auf die Schwimmplatte i ausgeübt wird. i wird ausgehend von vorne links im Uhrzeigersinn um das Fahrzeug gezählt, d.h.:

➤ i = 1,2: Vorderachse und

➤ i = 3,4: Hinterachse. $m_i = m_i^{Fzg} + m_i^{Sp}$, d.h. Fahrzeug Teilmasse, die über das jeweilige Rad abgetragen wird, sowie die Masse des fahrzeugbezogenen Radaufstandsteils der jeweiligen Schwimmplatte.

Die Schwimmplatten sind unterteilt in einen Prüfstandteil der Schwimmplatte sowie einen fahrzeugbezogenen Radaufstandsteil der Schwimmplatte. Der Prüfstandteil der Schwimmplatte trägt den fahrzeugbezogenen Radaufstandsteil der Schwimmplatte. Bei der Durchführung von Prüf-, Mess- und/oder Einstellarbeiten am Fahrzeug ist der Prüfstandteil der Schwimmplatten ortsfest bezogen auf den Fahrzeugprüfstand. Die fahrzeugbezogenen Radaufstandsteile der Schwimmplatten sind bei nicht geklemmter - d.h. gelöster - Betriebsstellung der Schwimmplatte möglichst reibungsarm in horizontaler Richtung bewegbar gegenüber den Prüfstandteilen der Schwimmplatten. Die fahrzeugbezogenen Radaufstandsteile der Schwimmplatte stehen bzw. liegen auf den Prüfstandteilen der Schwimmplatte auf.

Es ist weiterhin bekannt, dass zumindest bei einigen der Schwimmplatten die Prüfstandteile zumindest einiger Schwimmplatten eines Prüfstandes mit Positioniermitteln in einer Richtung bewegbar sind, die der Fahrzeuglängsrichtung eines in dem Prüfstand befindlichen Fahrzeugs entspricht. Dadurch ist es möglich und bekannt, vor dem Einfahren eines Fahrzeugs in den Prüfstand den Abstand zwischen den Schwimmplatten einer Fahrzeugseite, auf denen Räder unterschiedlicher Achsen des Fahrzeugs aufstehen, an den Radstand des Fahrzeugs anzupassen. Insofern können zumindest von einigen Schwimmplatten eines Prüfstandes auch die Prüfstandsteile der Schwimmplatten zumindest in einer definierten Betriebsstellung des Prüfstands gegenüber dem Prüfstand bewegbar sein. Ebenso kann vorgesehen sein, mit denselben oder weiteren Positioniermitteln die Prüfstandsteile zumindest einzelner Schwimmplatten (d.h. wenigstens einer Fahrzeugseite) in Y-Richtung zu bewegen, um eine Anpassung an die Spurbreiten unterschiedlicher Fahrzeuge vornehmen zu können.

Für die Funktionsprüfung des Prüfstandes kommt es im Zusammenhang mit der vorliegenden Erfindung darauf an, zu prüfen, ob die Bewegung der fahrzeugbezogenen Radaufstandsteile der Schwimmplatte gegenüber den Prüfstandsteilen der jeweiligen Schwimmplatten im Rahmen der zulässigen Toleranzen ausreichend reibungsarm möglich ist.

Deswegen ist bei dem Beitrag der Schwimmplatte zur relevanten Masse, die bei der Gleichung der Reibung zu berücksichtigen ist, nur die Masse des fahrzeugbezogenen Radaufstandsteils der jeweiligen Schwimmplatte relevant, weil es um die Bewegung dieses fahrzeugbezogenen Radaufstandsteils der jeweiligen Schwimmplatte gegenüber dem (feststehenden) Prüfstandsteil der jeweiligen Schwimmplatte geht.

Die Kennzahl der Prüfung ist der Reibungskoeffizient $\hat{\mu}$ und es gilt:

$$\hat{\mu} = \frac{F}{G} = \sum_{i=1}^{4} \mu_i * \frac{G_i}{G}$$

Dabei gilt für das Gesamtgewicht G:

$$G = \text{Fzg}_{\text{Gesamt}} + 4*$$

Gewicht "fahrzeugbezogener Radaufstandsteil der Schwimmplatte"

Auf Basis dieser Gleichungen lassen sich verschiedene Fälle betrachten.

1.Fall
$\mu_i = \mu$ für alle i

$$\to \qquad \hat{\mu} = \mu \sum_{i=1}^{4} \frac{G_i}{G} = \mu$$

2.Fall $\quad G_i = \frac{1}{4}G \quad$ d.h. es wird für diesen Fall eine gleichmäßige Gewichtsverteilung des Fahrzeuggesamtgewichts auf alle vier Räder des Fahrzeugs unterstellt (auch wenn dies in der Praxis eher unwahrscheinlich ist). Daraus ergibt sich:

$$\to \qquad \hat{\mu} = \frac{1}{4} \sum_{i=1}^{4} \mu_i = \bar{\mu}$$

d.h. Mittelwert von $\mu_i$.

3.Fall
¾ des Fahrzeuggesamtgewichtes wird über die Vorderachse abgetragen. Daraus ergibt sich als Fahrzeuggewicht, das über die beiden Vorderräder abgetragen wird:

$$G_1 = G_2 = \frac{3}{8} G$$

Daraus folgt dann weiterhin, dass das verbleibende ¼ des Fahrzeuggesamtgewichtes über die Hinterachse abgetragen wird. Daraus ergibt sich als Fahrzeuggewichte $G_3$, $G_4$, das über die beiden Hinterräder abgetragen wird:

$$G_3 = G_4 = \frac{1}{8} G$$

Daraus ergibt sich für diesen dritten Fall als Reibungskoeffizient $\hat{\mu}$:

$$\hat{\mu} = \sum_{i=1}^{2} \mu_i \frac{3}{8} + \sum_{i=3}^{4} \mu_i \frac{1}{8}$$

$$\hat{\mu} = \frac{3}{4} \bar{\mu}_{VA} + \frac{1}{4} \bar{\mu}_{HA}$$

Es ist zu sehen, dass sich zu den Reibungskoeffizienten Toleranzen definieren lassen. Wenn die tatsächlich vorliegenden Reibungskoeffizienten die gesamte Toleranzbandbreite überschreiten, die sich in der Gesamtschau der Toleranzen der einzelnen Schwimmplatte ergibt, kann darauf geschlossen werden, dass wenigstens eine der Schwimmplatten hinsichtlich der Reibungskoeffizienten außerhalb der Toleranz liegt.

Dies gilt auch, wenn das Fahrzeug bei einer Kraft, die über die Einstellmittel auf das Fahrzeug ausgeübt wird, beginnt, sich um die vertikale Achse zu drehen, die durch den Aufstandspunkt des Fahrzeugrades auf einer defekten Schwimmplatte geht. Auch bei einer solchen Drehung muss sich der fahrzeugbezogene Radaufstandsteil dieser Schwimmplatte drehen, so dass sich ein Defekt dieser Schwimmplatte ebenfalls bemerkbar macht.

Bei der Ausgestaltung des Verfahrens nach Anspruch 2 erfolgen die Erfassung und Bewertung der Kraft und/oder der mit dieser Kraft korrelierenden Größe bei einer Bewegung des Fahrzeugs bei unterschiedlichen Einstellungen der den vorderen sowie den hinteren Fahrzeugrädern zugeordneten Schwimmplatten im Hinblick auf den Radstand (X).

Vorteilhaft werden hierbei verschiedene Ausrichtungen der Schwimmplatten in Fahrzeuglängsrichtung bei der Erfassung und Bewertung der Kräfte berücksichtigt.

Die Durchführung des Verfahrens kann derart erfolgen, dass zunächst bei einer bestimmten Stellung der Prüfstandsteile der Schwimmplatten hinsichtlich des Radstandes die fahrzeugbezogenen Radaufstandselemente der Schwimmplatte in horizontaler Richtung quer zur Fahrzeuglängsrichtung mit den Einstellmitteln bewegt werden. Anschließend werden die Prüfstandsteile der Schwimmplatten in eine andere Position hinsichtlich des Radstandes verfahren und die fahrzeugbezogenen Radaufstandselemente der Schwimmplatten werden wieder mit den Einstellmitteln quer zur Fahrzeuglängsrichtung bewegt.

Es ist dabei ebenfalls möglich, mit den Einstellmitteln eine Kraft auf das Fahrzeug in der horizontalen Ebene auszuüben, die in einer anderen Richtung als der Querrichtung des Fahrzeugs verläuft.

Anspruch 3 betrifft ein erfindungsgemäßes Verfahren zur Funktionsprüfung von Schwimmplatten als Bestandteil eines Prüfstandes für Prüf-, Mess- und/oder Einstellarbeiten an einem Fahrzeug, wobei die Schwimmplatten jeweils ein fahrzeugbezogenes Radaufstandsteil aufweisen, das in einer gelösten Betriebsstellung der Schwimmplatte gegenüber einem Prüfstandsteil der jeweiligen Schwimmplatte in der horizontalen Ebene beweglich ist und das in einer geklemmten Betriebsstellung der Schwimmplatte mit dem Prüfstandsteil der jeweiligen Schwimmplatte starr verbunden ist bezogen auf eine Bewegung in der horizontalen Ebene, wobei weiterhin Positioniermittel vorhanden sind zur Verschiebung der Prüfstandsteile von einer oder mehreren Schwimmplatten. Nach der vorliegenden Erfindung erfolgt bei geklemmter Betriebsstellung von wenigstens einer Schwimmplatten und bei gelöster Betriebsstellung der übrigen Schwimmplatten und bei einem im Prüfstand auf den Schwimmplatten aufstehenden Fahrzeug mittels der Positioniermittel eine Verschiebung der Prüfstandsteile der zugeordneten Schwimmplatten, soweit diese nicht geklemmt sind. Dabei erfolgt weiterhin eine Erfassung und Bewertung der Kraft, die zur Bewegung der Prüfstandsteile der zugeordneten Schwimmplatten erforderlich ist und/oder eine Erfassung und Bewertung einer mit dieser Kraft korrelierenden Größe.

Die Erfindung gemäß Anspruch 3 macht sich den Effekt zu Nutze, dass es für die Bewertung der Reibungskräfte physikalisch gleichwertig ist, ob das fahrzeugbezogene Radaufstandsteil gegenüber dem ortsfesten Prüfstandsteil der Schwimmplatte bewegt wird oder ob das fahrzeugbezogene Radaufstandsteil einer Schwimmplatte ortsfest gehalten wird und das dieser Schwimmplatte zugeordnete Prüfstandsteil unter diesem fahrzeugbezogenen Radaufstandsteil bewegt wird.

Der fahrzeugbezogene Radaufstandsteil der nicht geklemmten Schwimmplatten wird bei dem Verfahren nach Anspruch 3 durch das aufstehende Fahrzeug ortsfest gehalten. Es ist wenigstens eine Schwimmplatte geklemmt. Dadurch kann das Fahrzeug mit den hier relevanten Kräften weder verschoben noch gedreht werden. Damit werden durch die jeweils aufstehenden Räder des insoweit ortsfest gehaltenen Fahrzeugs die fahrzeugbezogenen Radaufstandsteile der Schwimmplatten auch dann ortsfest gehalten, wenn die jeweiligen Schwimmplatten in der gelösten Betriebsstellung sind.

Damit können bei den gelösten Schwimmplatten mit den Positioniermitteln die Prüfstandsteile der jeweiligen Schwimmplatten gegenüber den ortsfest gehaltenen fahrzeugbezogenen Radaufstandsteilen der jeweiligen Schwimmplatten bewegt werden.

Die Prüfstandsteile werden dabei zum einen gegen die Reibungskraft von deren Lagerung im Prüfstand bewegt. Bei dieser Reibungskraft wirkt als Gewicht das Prüfstandsteil der Schwimmplatte zuzüglich dem darauf abgestützten Gewicht des fahrzeugbezogenen Radaufstandsteils der Schwimmplatte sowie dem Teil des Fahrzeuggewichts, das über das Fahrzeugrad abgetragen wird, das auf dieser Schwimmplatte aufsteht.

Weiterhin werden die Prüfstandsteile gegen die Reibungskraft bewegt, die sich daraus ergibt, dass das fahrzeugbezogene Radaufstandsteil der Schwimmplatte sowie der Teil des Fahrzeuggewichts, das über das Fahrzeugrad abgetragen wird, das auf dieser Schwimmplatte aufsteht, ortsfest gehalten wird.

Die erforderliche Kraft zur Bewegung eines Prüfstandsteils einer Schwimmplatte bei der Ausgestaltung nach Anspruch 3 setzt sich damit zusammen aus der Summe der Reibungskraft des Prüfstandsteils gegen dessen Lagerung im Prüfstand:

$$F_{i,reib,unten} =$$

$$\mu_{i,Lagerung,unten} * (m_{i,Prüfstandsteil} + m_{i,fahrbezogenesRadaufstandsteil} + m_{i,Fahrzeug})$$

sowie der Reibungskraft des Prüfstandsteils gegen die auf diesem Prüfstandsteil aufstehende und ortsfest gehaltene Masse:

$$F_{i,reib,oben} = \mu_i * (m_{i,fahrzeugbezogenesRadaufstandsteil} + m_{i,Fahrzeug})$$

Die Größen $m_{i,Prüfstandsteil}$ sowie $m_{i,fahrzeugbezogenesRadaufstandsteil}$ können als bekannt vorausgesetzt werden aus den vorliegenden Konstruktionsdaten des Fahrzeugprüfstandes.

Es ist möglich, die Größe $\mu_{i,Lagerung,unten}$ vorab zu bestimmen, so lange noch kein Fahrzeug im Prüfstand aufsteht. Vorteilhaft ist hierbei das fahrzeugbezogene Radaufstandsteil der Schwimmplatte gegenüber dem Prüfstandsteil geklemmt gegenüber einer Relativbewegung in horizontaler Richtung. In diesem Fall treten keine Reibungskräfte auf wegen einer Verschiebung des Prüfstandsteils der Schwimmplatte relativ zum fahrzeugbezogenen Radaufstandsteil der Schwimmplatte. Wenn in dieser Konstellation durch die Positioniermittel das entsprechende Prüfstandsteil der Schwimmplatte bewegt wird, reduzieren sich die gerade angegebenen Gleichungen wie folgt:

$$F_{i,reib,unten} = \mu_{i,Lagerung,unten} * (m_{i,Prüfstandsteil} + m_{i,fahrbezogenesRadaufstandsteil})$$

In dieser Gleichung sind die Massen aus den Konstruktionsdaten des Fahrzeugprüfstandes bekannt, die Kraft $F_{i,reib,unten}$ entspricht dann der gemessenen Kraft, bei der sich das Prüfstandsteil gerade in Bewegung versetzt, und ist damit durch die Messung auch bekannt.

Damit lässt sich aus diesen Daten die Größe $\mu_{i,Lagerung,unten}$ berechnen.

Diese Messung und Berechnung der Größe $\mu_{i,Lagerung,unten}$ kann beispielsweise im Zusammenhang mit der Inbetriebnahme des Fahrzeugprüfstandes erfolgen. Es ist ebenso möglich, im Zusammenhang mit einer Funktionsprüfung nach der vorliegenden Erfindung ohne ein aufstehendes Fahrzeug im Prüfstand die beschriebenen Messungen zur nachfolgenden Berechnung der Größe $\mu_{i,Lagerung,unten}$ in direktem zeitlichem Zusammenhang vor dem Einfahren des Fahrzeugs in den Prüfstand oder nach dem Ausfahren des Fahrzeugs aus dem Prüfstand die beschriebenen Messungen zur nachfolgenden Berechnung der Größe $\mu_{i,Lagerung,unten}$ durchzuführen. Dies erweist sich insofern als vorteilhaft, weil die Größe damit aktuell ermittelt wird und damit auch eventuelle Beschädigungen der Lagerung des Prüfstandsteils im Fahrzeugprüfstand erkannt und für die nachfolgende Berechnung der Größe $\mu_i$ ausgeglichen werden können. Gegebenenfalls kann auch eine Reparatur der beschädigten Lagerung des Prüfstandsteils im Fahrzeugprüfstand veranlasst werden.

Mit der bekannten Größe $\mu_{i,Lagerung,unten}$ ergibt sich aus den beiden obigen Gleichungen für die Prüfbedingungen eines aufstehenden Fahrzeuges mit wenigstens zwei geklemmten Schwimmplatten:

$$F_{i,reib,unten} =$$

$$\mu_{i,Lagerung,unten} * \left(m_{i,Prüfstandsteil} + m_{i,fahrbezogenesRadaufstandsteil} + m_{i,Fahrzeug}\right)$$

$$F_{i,reib,oben} = \mu_i * \left(m_{i,fahrzeugbezogenesRadaufstandsteil} + m_{i,Fahrzeug}\right)$$

Die Summe dieser Reibungskräfte entspricht der gemessenen Kraft zur Bewegung des Prüfstandsteils unten den angegebenen Prüfbedingungen und führt zu folgender Gleichung:

$$F_{mess} =$$

$$\mu_{i,Lagerung,unten} * \left(m_{i,Prüfstandsteil} + m_{i,fahrbezogenesRadaufstandsteil} + m_{i,Fahrzeug}\right) +$$

$$\mu_i * \left(m_{i,fahrzeugbezogenesRadaufstandsteil} + m_{i,Fahrzeug}\right)$$

Soweit der Anteil des Fahrzeuggewichtes bekannt ist, der über das jeweilige Rad abgetragen wird, sind aus der genannten Gleichung alle Größen bekannt außer der interessierenden Größe $\mu_i$. Durch entsprechendes Umstellen dieser Gleichung lässt sich damit die Größe $\mu_i$ berechnen.

Nach der Berechnung kann direkt festgellt werden durch einen Vergleich der berechneten Größe mit dem Sollwert, ob die berechnete Größe innerhalb der zugelassenen Toleranzen liegt.

Sofern die Positioniermittel nicht derart ausgestaltet und ansteuerbar sind, dass diese gezielt lediglich ein Prüfstandsteil einer Schwimmplatte bewegen, ergeben sich die nachfolgend erläuterten Verhältnisse. Diese können beispielsweise auftreten bei Prüfständen, bei denen die Schwimmplatten, die einer Achse eines Fahrzeugs zugeordnet sind, zur Anpassung des Prüfstands an den Radstand des Fahrzeugs synchron mit den Positioniermitteln bewegbar sind. Die physikalischen Verhältnisse sind in diesem Fall grundsätzlich die gleichen, die gerade beschrieben wurden. Allerdings treten jeweils die Summen der Reibungskoeffizienten sowie der jeweiligen Gewichte der rechten und der linken Fahrzeugseite auf, die dann auch nicht mehr ohne weiteres einzeln bewertet werden können.

Es ist auch ersichtlich, dass bei einer solchen Ausgestaltung (synchronisierte Bewegung der Prüfstandsteile zweier Schwimmplatten, die den Rädern einer Achse des Fahrzeugs zugeordnet sind) zur Durchführung des Verfahrens nach Anspruch 3 die Schwimmplatten dieser Achse sowohl rechts als auch links in der gelösten Betriebsstellung sein müssen, wenn die Positioniermittel die Prüfstandsteile dieser Schwimmplatten dieser Achse bei einem aufstehenden Fahrzeug bewegen sollen. Es muss dann entsprechend wenigstens eine Schwimmplatten einer anderen Achse geklemmt sein (bei einem zweiachsigen Fahrzeug dann entsprechend wenigstens eine Schwimmplatten der anderen Achse).

Lassen sich die Prüfstandsteile einer Achse nur synchron bewegen, ergeben sich folgende Verhältnisse: Die erforderliche Kraft zur Bewegung der beiden Prüfstandsteile der Schwimmplatten, die den Rädern einer Achse des Fahrzeugs zugeordnet sind (links und rechts, gekennzeichnet durch die Indices in den nachfolgenden Gleichungen), setzt sich bei der Ausgestaltung nach Anspruch 3 zusammen aus der Summe der Reibungskräfte der beiden Prüfstandsteile gegen deren Lagerung im Prüfstand:

$$F_{l,reib,unten} + F_{r,reib,unten} =$$

$$\mu_{l,Lagerung,unten} * \left(m_{l,Prüfstandsteil} + m_{l,fahrbezogenesRadaufstandsteil} + m_{l,Fahrzeug}\right) +$$

$$\mu_{r,Lagerung,unten} * \left(m_{r,Prüfstandsteil} + m_{r,fahrbezogenesRadaufstandsteil} + m_{r,Fahrzeug}\right)$$

zuzüglich der Summe der Reibungskräfte der Prüfstandsteile gegen die jeweils auf diesen Prüfstandsteilen aufstehenden und ortsfest gehaltenen Massen:

$$F_{l,reib,oben} + F_{r,reib,oben} = \mu_l * (m_{l,fahrzeugbezogenesRadaufstandsteil} + m_{l,Fahrzeug}) +$$

$$\mu_r * (m_{r,fahrzeugbezogenesRadaufstandsteil} + m_{r,Fahrzeug})$$

Die Größen $m_{l,Prüfstandsteil}$, $m_{r,Prüfstandsteil}$ sowie $m_{l,fahrzeugbezogenesRadaufstandsteil}$, $m_{r,fahrzeugbezogenesRadaufstandsteil}$ können als bekannt vorausgesetzt werden aus den vorliegenden Konstruktionsdaten des Fahrzeugprüfstandes. Da der Fahrzeugprüfstand hinsichtlich der Schwimmplatten identisch aufgebaut ist, sofern diese dieselbe Funktionalität aufweisen, was deren Bewegbarkeit betrifft, gilt weiterhin:

$m_{l,Prüfstandsteil'} = m_{r,Prüfstandsteil}$ und

$m_{l,fahrzeugbezogenesRadaufstandsteil'} = m_{r,fahrzeugbezogenesRadaufstandsteil}$

Für die weitere Betrachtung kann auch unterstellt werden, dass die Anteile des Fahrzeuggewichtes, die über die Räder derselben Achse auf der linken und rechten Seite des Fahrzeugs abgetragen werden, identisch sind. Das bedeutet:

$m_{l,Fahrzeug} = m_{r,Fahrzeug} = m_{Fzg}$

Es ist möglich, die Größe $\mu_{Lagerung,unten}$ als Summe der beiden Größen ($\mu_{l,Lagerung,unten} + \mu_{r,Lagerung,unten}$) vorab zu bestimmen, so lange noch kein Fahrzeug im Prüfstand aufsteht. Vorteilhaft sind hierbei die fahrzeugbezogenen Radaufstandsteile der Schwimmplatten "links" und "rechts" gegenüber dem jeweiligen Prüfstandsteil geklemmt gegenüber einer Relativbewegung in horizontaler Richtung. In diesem Fall treten keine Reibungskräfte auf wegen einer Verschiebung des Prüfstandsteils der jeweiligen Schwimmplatte relativ zum fahrzeugbezogenen Radaufstandsteil der Schwimmplatte. Wenn in dieser Konstellation durch die Positioniermittel die entsprechenden Prüfstandsteile der Schwimmplatten bewegt werden, reduzieren sich die gerade angegebenen Gleichungen wie folgt:

$$F_{l,reib,unten} + F_{r,reib,unten} = F_{l,reib,unten} =$$

$$\mu_{Lagerung,unten} * 2 * (m_{Prüfstandsteil} + m_{fahrbezogenesRadaufstandsteil})$$

In dieser Gleichung sind die Massen aus den Konstruktionsdaten des Fahrzeugprüfstandes bekannt, die Kraft $F_{reib,unten}$ entspricht dann der gemessenen Kraft, bei der sich die Prüfstandsteile gerade in Bewegung setzen und ist damit durch die Messung auch bekannt. Damit lässt sich aus diesen Daten die Größe $\mu_{Lagerung,unten}$ der beiden Prüfstandsteile insgesamt berechnen.

Diese Messung und Berechnung der Größe $\mu_{Lagerung,unten}$ kann beispielsweise im Zusammenhang mit der Inbetriebnahme des Fahrzeugprüfstandes erfolgen. Es ist ebenso möglich, im Zusammenhang mit einer Funktionsprüfung nach der vorliegenden Erfindung ohne ein aufstehendes Fahrzeug im Prüfstand die beschriebenen Messungen zur nachfolgenden Berechnung der Größe $\mu_{Lagerung,unten}$ in direktem zeitlichem Zusammenhang vor dem Einfahren des Fahrzeugs in den Prüfstand oder nach dem Ausfahren des Fahrzeugs aus dem Prüfstand die beschriebenen Messungen zur nachfolgenden Berechnung der Größe $\mu_{Lagerung,unten}$ durchzuführen. Dies erweist sich insofern als vorteilhaft, weil die Größe damit aktuell ermittelt wird und damit auch eventuelle Beschädigungen einer oder auch beider Lagerungen der Prüfstandsteile im Fahrzeugprüfstand erkannt und für die nachfolgende Berechnung der Größe $\mu_i$ ausgeglichen werden können. Gegebenenfalls kann auch eine Reparatur einer beschädigten Lagerung eines Prüfstandsteils im Fahrzeugprüfstand veranlasst werden.

Es ist ebenso möglich, für einen Prüfstand einen "konstruktionsbedingten" Wert der Größe $\mu_{Lagerung,unten}$ vorzugeben. Wenn der tatsächliche Wert dieser Reibung infolge Abnutzung oder Beschädigung der Schwimmplatte größer wird, wird auch die Kraft größer, die für die Bewegung benötigt wird. Aus dieser Kraft wird die interessierende Größe des Reibbeiwertes zwischen dem Prüfstandsteil der Schwimmplatte und dem fahrzeugbezogenen Radaufstandsteil der Schwimmplatte berechnet. Wenn die gemessene Kraft größer wird und der Wert $\mu_{Lagerung,unten}$ zu gering angesetzt wird, wird der interessierende Reibbeiwert mit einem zu großen Wert berechnet. Das bedeutet, dass die Schwimmplatte als fehlerhaft erkannt wird und der Fehler dem interessierenden Reibbeiwert zwischen dem Prüfstandsteil der Schwimmplatte und dem fahrzeugbezogenen Radaufstandsteil der Schwimmplatte zugeordnet wird. Auch wenn eventuell diese Fehlerzuordnung nicht stimmt, wird dennoch richtigerweise erkannt, dass die Schwimmplatte einen Fehler aufweist. Die Schwimmplatte kann bei einem erkannten Fehler näher untersucht werden, um die tatsächliche Fehlerursache zu ermitteln. Es zeigt sich, dass auch mit der vereinfachenden Annahme eines konstant bleibenden Wertes für die Größe $\mu_{Lagerung,unten}$ auftretende Fehler dennoch erkannt werden. Diese Annahme lässt sich auch in entsprechender Weise machen, wenn die Schwimmplatten mittels der Positioniermittel einzeln bewegbar sind.

Mit der bekannten Größe $\mu_{\text{Lagerung,unten}}$ ergibt sich aus den Gleichungen für die Prüfbedingungen eines aufstehenden Fahrzeuges, soweit wenigstens eine der anderen Schwimmplatten in der geklemmten Betriebsstellung ist:

$$F_{\text{reib,unten}} =$$

$$\mu_{\text{Lagerung,unten}} * 2 * (m_{\text{Prüfstandsteil}} + m_{\text{fahrbezogenesRadaufstandsteil}} + m_{\text{Fzg}})$$

$$F_{\text{reib,oben}} = (\mu_l + \mu_r) * 2 * (m_{\text{fahrzeugbezogenesRadaufstandsteil}} + m_{\text{Fzg}})$$

Die Summe dieser Reibungskräfte entspricht der gemessenen Kraft zur Bewegung der Prüfstandsteile unter den angegebenen Prüfbedingungen und führt zu folgender Gleichung:

$$F_{\text{mess}} =$$

$$\mu_{\text{Lagerung,unten}} * 2 * (m_{\text{Prüfstandsteil}} + m_{\text{fahrbezogenesRadaufstandsteil}} + m_{\text{Fzg}}) +$$

$$(\mu_l + \mu_r) * 2 * (m_{\text{fahrzeugbezogenesRadaufstandsteil}} + m_{\text{Fzg}})$$

Soweit der Anteil des Fahrzeuggewichtes (d.h. die Größe $m_{\text{Fzg}}$) bekannt ist, das über das jeweilige Rad auf der rechten und linken Fahrzeugseite abgetragen wird, sind aus der genannten Gleichung alle Größen bekannt außer der interessierenden Größe $(\mu_l + \mu_r)$. Durch entsprechendes Umstellen dieser Gleichung lässt sich damit die Größe $(\mu_l + \mu_r)$ berechnen.

Nach der Berechnung kann direkt festgellt werden durch einen Vergleich der berechneten Summe der Reibungskoeffizienten der linken und der rechten Seite mit der Summe der Sollwerte für die Reibungskoeffizienten, ob die berechnete Größe innerhalb der zugelassenen Toleranzen liegt.

Auch wenn die Positioniermittel so ausgestaltet sind, das diese die Prüfstandsteile der Schwimmplatten nicht einzeln bewegen können sondern lediglich synchron für die Prüfstandsteile einer Achse des Fahrzeugs, ist dennoch eine nähere Eingrenzung möglich, welche der Schwimmplatten eventuell einen erhöhten Reibungskoeffizienten aufweist, als wenn eine Untersuchung lediglich nach dem Verfahren nach Anspruch 1 erfolgt.

Anspruch 4 betrifft ein erfindungsgemäßes Verfahren zur Funktionsprüfung von Schwimmplatten als Bestandteil eines Prüfstandes für Prüf-, Mess- und/oder Einstellarbeiten an einem Fahrzeug, wobei die Schwimmplatten jeweils ein fahrzeugbezogenes Radaufstandsteil aufweisen, das in einer gelösten Betriebsstellung der Schwimmplatte gegenüber einem Prüfstandsteil der jeweiligen Schwimmplatte in der horizontalen Ebene beweglich ist und das in einer geklemmten Betriebsstellung der Schwimmplatte mit dem Prüfstandsteil der jeweiligen Schwimmplatte starr verbunden ist bezogen auf eine Bewegung in der horizontalen Ebene, wobei weiterhin Positioniermittel vorhanden sind zur Verschiebung der Prüfstandsteile von einer oder mehreren Schwimmplatten. Erfindungsgemäß erfolgt gemäß Anspruch 4 bei geklemmter Betriebsstellung von wenigstens einer Schwimmplatte eine Verschiebung der Prüfstandsteile dieser Schwimmplatte mittels der Positioniermittel. Dabei sind die übrigen Schwimmplatten in der gelösten Betriebsstellung.

Die Prüfstandsteile dieser Schwimmplatten in der gelösten Betriebsstellung werden im Prüfstand ortsfest gehalten. Die Verschiebung des Prüfstandsteils der wenigstens einen Schwimmplatte in der geklemmten Betriebsstellung mittels der Positioniermittel erfolgt bei einem im Prüfstand auf den Schwimmplatten aufstehenden Fahrzeug. Es erfolgt eine Erfassung und Bewertung der Kraft, die zur Bewegung des Prüfstandsteils der wenigstens einen Schwimmplatte in der geklemmten Betriebsstellung mittels der Positioniermittel erforderlich ist und/oder eine Erfassung und Bewertung einer mit dieser Kraft korrelierenden Größe.

Wie im Zusammenhang mit Anspruch 3 erläutert, wird auch im Zusammenhang mit Anspruch 4 ausgenutzt, dass die Abstände der fahrzeugbezogenen Radaufstandsteile der Schwimmplatten durch das aufstehende Fahrzeug definiert sind. Es lassen sich dann abhängig davon, ob die jeweiligen Schwimmplatten geklemmt sind und ob die jeweiligen Prüfstandsteile ortsfest gehalten oder mittels der Positioniermittel bewegt werden, verschiedene Bewegungen der Prüfstandsteile und der fahrzeugbezogenen Radaufstandsteile der Schwimmplatten erzeugen, bei denen entsprechende verschiedene Reibungskräfte zwischen den jeweiligen Bauteilen wirken.

Bei der Ausgestaltung nach Anspruch 4 wird über die Schwimmplatten in der geklemmten Betriebsstellung mit dem im Fahrzeugprüfstand positionierten Fahrzeug eine Bewegung des Fahrzeugs veranlasst durch eine Bewegung der Prüfstandsteile der Schwimmplatten in der geklemmten Betriebsstellung mittels der Positioniermittel. Da diese Schwimmplatten in der geklemmten Betriebsstellung sind, werden die fahrzeugbezogenen Radaufstandsteile dieser Schwimmplatten und damit auch das darauf stehende Fahrzeug mit den Prüfstandsteilen bewegt.

Diese Bewegung des Fahrzeugs bewirkt eine Bewegung der fahrzeugbezogenen Radaufstandsteile der Schwimmplatten in der gelösten Betriebsstellung, deren Prüfstandsteile im Prüfstand ortsfest gehalten werden.

Sinngemäß zu den Erläuterungen im Zusammenhang mit Anspruch 3 lassen sich alle Parameter und Reibungskräfte berechnen, die im Zusammenhang mit dem Bewegungsablauf nach Anspruch 4 an den Schwimmplatten in der geklemmten Betriebsstellung auftreten zur Bewegung der Prüfstandsteile mit den darauf geklemmten fahrzeugbezogenen Radaufstandsteilen sowie dem auf den jeweiligen Schwimmplatten abgetragenen Fahrzeuggewicht. Insbesondere kann auch wieder der Reibungskoeffizient zwischen dem Prüfstandsteil und der Lagerung des Prüfstandsteils im Fahrzeugprüfstand durch eine Messung ohne aufstehendes Fahrzeug vorab ermittelt werden, wie dies im Zusammenhang mit Anspruch 3 beschrieben wurde.

Aus der gemessenen Kraft zur Verschiebung der Prüfstandsteile und damit der geklemmten Schwimmplatten sowie dem darauf stehenden Fahrzeug insgesamt, lassen sich durch Differenzbildung die Reibungskraft bzw. die Reibungskräfte an den gelösten Schwimmplatten berechnen.

Aus diesen Reibungskräften lässt sich wiederum unter Beachtung der Gewichte der jeweiligen fahrzeugbezogenen Radaufstandsteile sowie der Anteile des Fahrzeuggewichtes, das über die jeweiligen Fahrzeugräder abgetragen wird, die Reibungskoeffizienten berechnen.

Es ist ersichtlich, dass im Zusammenhang mit Anspruch 3 und Anspruch 4 die Positioniermittel den jeweiligen Prüfstandsteil der Schwimmplatte in Fahrzeuglängsrichtung und oder in Fahrzeugquerrichtung bewegen können. Diese Einstellmöglichkeiten der Schwimmplatten in einem Fahrzeugprüfstand sind vorhanden abhängig von der Ausstattung des Prüfstandes mit einer Einstellmöglichkeit für unterschiedliche Radstände von Fahrzeugen bzw. für unterschiedliche Spurbreiten von Fahrzeugen.

Anspruch 5 betrifft eine Kombination eines der Verfahren nach Anspruch 1 oder 2 mit einem der Verfahren nach Anspruch 3 oder 4. Dabei wird das Ergebnis einer Funktionsprüfung von Schwimmplatten nach dem Verfahren gemäß Anspruch 3 und/oder 4 verwendet, um in einer kombinierten Auswertung mit einer Funktionsprüfung gemäß Anspruch 1 oder 2 unter Verwendung der Ergebnisse der Funktionsprüfungen nach Anspruch 3 und/oder 4 Bewertungen für die Schwimmplatten abzuleiten, zu denen bei den Funktionsprüfungen gemäß Anspruch 3 oder 4 noch keine Aussage getroffen werden kann.

Obwohl das Verfahren gemäß Anspruch 1 oder 2 nur eine gemeinschaftliche Funktionsprüfung aller Schwimmplatten zulässt, lässt sich mit dem Verfahren nach Anspruch 5 ein Fehler u.U. besser eingrenzen. Sofern bei dem Verfahren nach Anspruch 3 oder 4 festgestellt wurde, dass bestimmte Schwimmplatten keine Funktionsstörung zeigen, kann eine bei der Vorgehensweise nach Anspruch 1 erkannte Funktionsstörung dann nur an einer Schwimmplatte liegen, die mit dem Verfahren nach Anspruch 3 oder 4 nicht bewertet wurde.

Gemäß Anspruch 6 weisen die Einstellmittel und/oder die Positioniermittel einen oder mehrere elektromotorische Antriebe auf. Die Erfassung der Kraft und/oder der mit dieser Kraft korrelierenden Größe erfolgt durch eine Messung der Leistungsdaten der elektromotorischen Antriebe und/oder der Energieaufnahme der elektromotorischen Antriebe in einem Zeitintervall.

Hierbei wird die Erfassung der Kraft in besonders einfacher Weise vorgenommen. Die Strommessung (bei konstanter und bekannter Spannung) ist ohne großen messtechnischen Aufwand durchführbar.

Aus der elektrischen Leistungsaufnahme lässt sich beispielsweise durch eine vorherige Modellbildung die Kraft ermitteln, die von dem elektromotorischen Antrieb aufgebracht wird.

Nachfolgend werden noch Beispiele erörtert, wie die Bewertung der Kraft, die durch die elektrische Leistungsaufnahme repräsentiert wird, auch ohne eine solche Modellbildung durchgeführt werden kann.

Bei der Ausgestaltung nach Anspruch 7 werden Kraftsensoren für die Messung der Kraft verwendet.

Hierbei erweist es sich als vorteilhaft, dass die entsprechende Größe direkt erfasst wird, ohne dass diese durch weitere Umrechnungen indirekt bestimmt werden muss.

Bei der Ausgestaltung nach Anspruch 8 wird bei der Bewertung der erfassten Kraft und/oder der mit dieser Kraft korrelierenden Größe das Fahrzeuggewicht berücksichtigt.

Ohne eine Berücksichtigung des Fahrzeuggewichtes kann nur eine eher grobe Funktionsüberprüfung vorgenommen werden. Dabei kann sich das Fahrzeuggewicht in einer bestimmten Bandbreite bewegen, die davon abhängig ist, welche Fahrzeuge überhaupt auf dem Fahrzeugprüfstand geprüft, gemessen und/oder eingestellt werden.

Ohne eine Berücksichtigung, um welches Fahrzeug es sich handelt, ist zwar eine Funktionsprüfung in dem Sinne möglich, dass erhebliche Schädigungen der Schwimmplatte, die zu einer entsprechend erheblichen Erhöhung des Reibbeiwertes zwischen dem fahrzeugbezogenen Radaufstandsteil und dem Prüfstandsteil der Schwimmplatte führen, erkannt werden können. Wegen der unterschiedlichen Gewichte müssen dann aber die Schwellwerte für die Erkennung einer benötigten Kraft mit entsprechenden Toleranzen definiert werden. Leichte Schädigungen sind dann u. U. nicht erkennbar.

Um auch solche leichteren Beschädigungen erkennen zu können, ist es vorteilhaft, das Fahrzeuggewicht zu berücksichtigen. Bei einer Berücksichtigung des Fahrzeuggewichtes kann wiederum näherungsweise eine bestimmte Verteilung des Gesamtgewichtes des Fahrzeugs vorgenommen werden, dass ein definierter Anteil über die Räder der Vorderachse abgetragen wird und der verbleibende Anteil über die Räder der Hinterachse. Es ist auch möglich, außer dem Fahrzeuggesamtgewicht noch die Gewichtsverteilung im Detail zu bestimmen.

Bei der Ausgestaltung nach Anspruch 9 wird das Fahrzeuggewicht (G) gemessen.

Damit ist die Prüfung vergleichsweise genau möglich. Eine Messung des Fahrzeuggewichtes kann beispielsweise durch eine Messung der Einfederwege des Fahrzeugs im statischen Zustand bestimmt werden.

Durch eine Messung des Fahrzeuggewichtes können vorteilhaft bei einem bestimmten Fahrzeugtyp die Gewichtsunterschiede berücksichtigt werden, die sich einstellen abhängig vom Umfang der Sonderausstattungen in dem Fahrzeug. Einige der Komfortausstattungen in einem Fahrzeug sind mit der Notwendigkeit verbunden, Elektromotoren einzubauen. Diese Elektromotoren erhöhen das Fahrzeuggewicht. Durch die Messung des tatsächlichen Fahrzeuggewichtes wird daher bei der Funktionsprüfung die Genauigkeit erhöht gegenüber einer standardisierten Wertzuweisung einer Belastung an der Vorder- bzw. Hinterachse des Fahrzeugs allein abhängig vom Fahrzeugtyp.

Bei der Ausgestaltung nach Anspruch 10 wird der Wert des Fahrzeuggewichts vorgegeben.

Diese Vorgabe des Wertes kann beispielsweise erfolgen, indem zu den Fahrzeugen, die auf dem jeweiligen Prüfstand geprüft, gemessen und/oder eingestellt werden, die entsprechenden Fahrzeuggewichte in einem Zentralrechner hinterlegt sind, von dem diese Werte abgerufen werden können, um die Prüfung der Schwimmplatten vornehmen zu können. Gegebenenfalls kann das Fahrzeuggewicht bei Durchführung eines Prüfvorganges auch manuell eingegeben werden.

Bei der Ausgestaltung nach Anspruch 11 wird bei einem Prüfstand im Neuzustand und/oder bei einem erstmalig auf dem Fahrzeugprüfstand geprüften Fahrzeugtyp die erfasste Kraft und/oder die mit dieser Kraft korrelierende Größe als Referenzwert gespeichert für die Kombination des Prüfstand mit dem Fahrzeugtyp. Dieser Referenzwert wird für die Bewertung künftiger erfasster Kräfte und/oder mit diesen Kräften korrelierenden Größen bei derselben Kombination des Prüfstandes mit demselben Fahrzeugtyp als Referenzwert verwendet.

Eine Schädigung einer Schwimmplatte kann dabei bei einer Abweichung von dem Referenzwert erkannt werden. Bei dieser Art der Bewertung erweist es sich als vorteilhaft, dass ein Grenzwert bezogen werden kann auf die Messgröße (beispielsweise die Leistungsaufnahme der Stellmittel), ohne dass eine Modellbildung notwendig wäre, um aus den Messgrößen die Kräfte zu bestimmen.

Bei der Ausgestaltung des Verfahren nach Anspruch 12 erfolgt eine Erfassung und Bewertung der Kraft bzw. einer mit dieser Kraft korrelierenden Größe, indem der Signalverlauf erfasst und bewertet wird derart, dass beim Auftreten eines Peaks im Signalverlauf bei einer Steigerung der Kraft bis zum Beginn der Bewegung des Fahrzeugs bzw. des (der) Prüfstandsteile der Schwimmplatte(n) auf eine Funktionsstörung geschlossen wird.

Im Idealfall handelt es sich bei der Bewegung der fahrzeugbezogenen Radaufstandsteile der Schwimmplatten gegenüber den Prüfstandsteilen um eine reine Rollbewegung. Eine ideale Rollbewegung weist keinen Übergang von einer Haftreibungskomponente zu einer Gleitreibungskomponente auf bei einer beginnenden Bewegung, Dieser Übergang ist vielmehr charakteristisch für eine Gleitbewegung (ein Rutschen). Da der Gleitreibungskoeffizient geringer ist als der Haftreibungskoeffizient, weisen die Bewegungsabläufe bei einer Gleitreibung, die vom Stillstand beginnt und in die Bewegung übergeht, zunächst einen Anstieg der Kraft auf bis zum Einsetzen der Bewegung (Überwindung der Haftreibung). Mit dem Einsetzen der Bewegung nimmt der Reibungskoeffizient stark ab, weil es sich dann um eine Gleitreibung handelt mit einem deutlich geringeren Gleitreibungskoeffizienten.

Deswegen kann aus dem im Zusammenhang mit dem in Anspruch 12 beschriebenen Signalverlauf geschlossen werden, dass in der Schwimmplatte die Bewegung des fahrzeugbezogenen Radaufstandsteils gegenüber dem Prüfstandteil nicht als reine Rollbewegung stattfindet. Dies lässt auf eine Funktionsstörung schließen.

Für die Bewegung des Fahrzeugs im Zusammenhang mit den Ansprüchen 1 oder 2 oder auf diese Ansprüche rückbezogene weitere Ansprüche können die Einstellmittel an dem jeweiligen Radaufstandsteil der Schwimmplatte angreifen oder auch am Fahrzeug selbst, indem dieses durch Schiebevorrichtungen seitlich verschoben wird.

Ein Ausführungsbeispiel der Erfindung ist in der Zeichnung dargestellt. Die Figuren zeigen dabei:

Fig. 1:     eine Prinzipdarstellung eines Fahrzeugprüfstandes in einer Draufsicht von oben.

Fig. 2:     eine Prinzipdarstellung eines Fahrzeugteils, das auf dem fahrzeugbezogenen Radaufstandteil einer Schwimmplatte aufsteht.

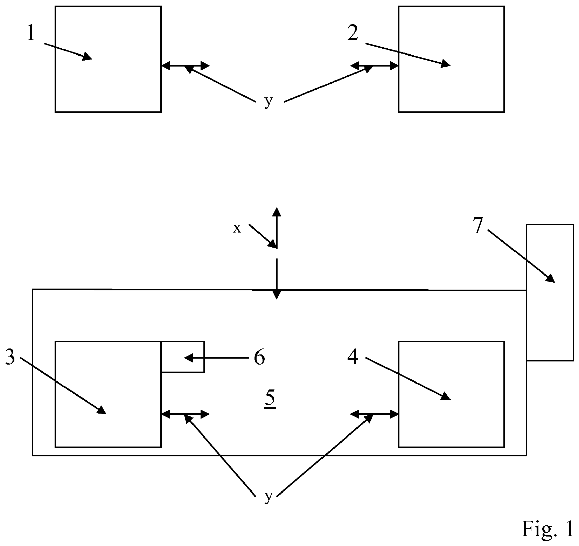

Figur 1 zeigt eine Prinzipdarstellung eines Fahrzeugprüfstandes in einer Draufsicht von oben. Dabei sind die vier Schwimmplatten 1, 2, 3, 4 zu sehen.

Die Schwimmplatten 3 und 4 sind gemeinsam auf einem Träger 5 montiert. Es sind Positioniermittel 7 vorhanden, mit denen dieser Träger 5 und damit auch die darauf montierten Schwimmplatten 3 und 4 (d.h. deren Prüfstandsteile zusammen mit deren fahrzeugbezogenen Radaufstandsteilen) insgesamt in x-Richtung beweglich sind. Diese Bewegung entspricht der Fahrzeuglängsrichtung eines in dem Prüfstand stehenden Fahrzeugs.

Damit lassen sich die Abstände der Schwimmplatten 1 und 3 sowie der Schwimmplatten 2 und 4 in Fahrzeuglängsrichtung verändern, um verschiedenen Radständen bei verschiedenen Fahrzeugen Rechnung tragen zu können.

Außerdem ist ein Einstellmittel 6 zu sehen (beispielsweise ein elektromotorischer Antrieb), das an dem fahrzeugbezogenen Radaufstandsteil der Schwimmplatte 3 angreift.

Wenn ein Fahrzeug auf den jeweiligen fahrzeugbezogenen Radaufstandsteilen der Schwimmplatten 1, 2, 3 und 4 aufsteht, genügt eine Bewegung eines der fahrzeugbezogenen Radaufstandsteile einer der Schwimmplatten (hier: der Schwimmplatte 3), um bei einer gelösten Betriebsstellung der Schwimmplatten 1, 2, 3, 4 zu erreichen, dass die Bewegung des fahrzeugbezogenen Radaufstandsteils der Schwimmplatte 3 über das darauf aufstehende Fahrzeug derart zu den fahrzeugbezogenen Radaufstandsteilen der anderen Schwimmplatten übertragen wird, dass diese sich auch mitbewegen gegenüber den jeweiligen Prüfstandsteilen der Schwimmplatten.

Die Bewegung des fahrzeugbezogenen Radaufstandsteils der Schwimmplatte 3 mittels des Einstellmittels 6 erfolgt in dem dargestellten Ausführungsbeispiel in y-Richtung, die quer zur Längsrichtung eines im Prüfstand befindlichen Fahrzeugs verläuft.

Wird ein Fehler erkannt, können nachfolgend alle Schwimmplatten einzeln Funktionstests unterzogen werden, um zu erkennen, welche Schwimmplatte(n) eine Funktionsstörung aufweist bzw. aufweisen.

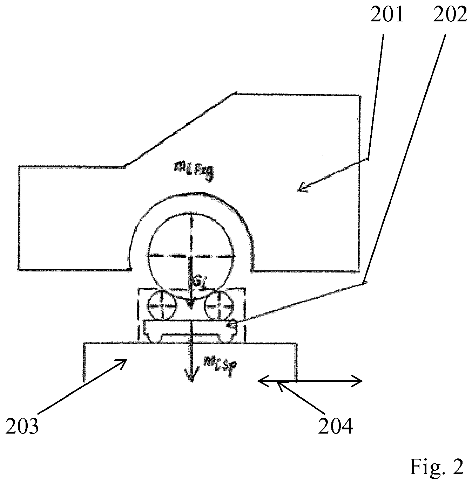

Figur 2 zeigt ein Fahrzeugteil 201 mit einem Fahrzeugrad, das auf einem fahrzeugbezogenen Radaufstandsteil 202 einer Schwimmplatte aufsteht.

Dieses fahrzeugbezogene Radaufstandsteil 202 ist gegenüber einem Prüfstandsteil 203 der Schwimmplatte in gelöster Betriebsstellung der Schwimmplatte in horizontaler Richtung beweglich.

Außerdem ist - dargestellt durch die Pfeile, die mit 204 bezeichnet sind - zu sehen, dass das Prüfstandsteil 203 der Schwimmplatte in dem Prüfstand beweglich ist in einer Richtung, die der Fahrzeuglängsrichtung eines in dem Prüfstand stehenden Fahrzeuges entspricht.


**Patentansprüche**

1. Verfahren zur Funktionsprüfung von Schwimmplatten (1, 2, 3, 4) als Bestandteil eines Prüfstandes für Prüf-, Mess- und/oder Einstellarbeiten an einem Fahrzeug, wobei die Schwimmplatten (1, 2, 3, 4) jeweils ein fahrzeugbezogenes Radaufstandsteil aufweisen, das in einer gelösten Betriebsstellung der Schwimmplatte (1, 2, 3, 4) gegenüber einem Prüfstandsteil der jeweiligen Schwimmplatte (1, 2, 3, 4) in der horizontalen Ebene (X, Y) beweglich ist und das in einer geklemmten Betriebsstellung der Schwimmplatte (1, 2, 3, 4) mit dem Prüfstandsteil der jeweiligen Schwimmplatte (1, 2, 3, 4) starr verbunden ist bezogen auf eine Bewegung in der horizontalen Ebene (X, Y),
**dadurch gekennzeichnet, dass** bei gelöster Betriebsstellung aller Schwimmplatten (1, 2, 3, 4) und bei einem im Prüfstand auf den Schwimmplatten (1, 2, 3, 4) aufstehenden Fahrzeug das Fahrzeug mitsamt den fahrzeugbezogenen Radaufstandsteilen der Schwimmplatten (1, 2, 3, 4) mittels Einstellmitteln (6) bewegt wird, wobei eine Erfassung und Bewertung der Kraft erfolgt, die zur Bewegung des Fahrzeugs mitsamt den fahrzeugbezogenen Radaufstandsteilen der Schwimmplatten (1, 2, 3, 4) erforderlich ist und/oder eine Erfassung und Bewertung einer mit dieser Kraft korrelierenden Größe.

2. Verfahren nach Anspruch 1,
**dadurch gekennzeichnet, dass** die Erfassung und Bewertung der Kraft und/oder der mit dieser Kraft korrelierenden Größe bei einer Bewegung des Fahrzeugs mitsamt den fahrzeugbezogenen Radaufstandsteilen der Schwimmplatten (1, 2, 3, 4) mittels der Einstellmittel (6) bei mehreren verschiedenen Einstellungen der Abstände der Prüfstandsteile der den vorderen sowie den hinteren Fahrzeugrädern zugeordneten Schwimmplatten (1, 2, 3, 4) im Hinblick auf den Radstand erfolgt (X).

3. Verfahren zur Funktionsprüfung von Schwimmplatten (1, 2, 3, 4) als Bestandteil eines Prüfstandes für Prüf-, Mess- und/oder Einstellarbeiten an einem Fahrzeug, wobei die Schwimmplatten (1, 2, 3, 4) jeweils ein fahrzeugbezogenes Radaufstandsteil aufweisen, das in einer gelösten Betriebsstellung der Schwimmplatte (1, 2, 3, 4) gegenüber einem Prüfstandsteil der jeweiligen Schwimmplatte (1, 2, 3, 4) in der horizontalen Ebene (X, Y) beweglich ist und das in einer geklemmten Betriebsstellung der Schwimmplatte (1, 2, 3, 4) mit dem Prüfstandsteil der jeweiligen Schwimmplatte (1, 2, 3, 4) starr verbunden ist bezogen auf eine Bewegung in der horizontalen Ebene (X, Y), wobei weiterhin Positioniermittel (7) vorhanden sind zur Verschiebung der Prüfstandsteile von einer oder mehreren Schwimmplatten (1, 2, 3, 4),
**dadurch gekennzeichnet, dass** bei geklemmter Betriebsstellung von wenigstens einer Schwimmplatte (1, 2, 3, 4), deren Prüfstandsteil zudem ortsfest positioniert ist bezogen auf den Prüfstand, und bei gelöster Betriebsstellung der übrigen Schwimmplatten (1, 2, 3, 4) und bei einem im Prüfstand auf den Schwimmplatten (1, 2, 3, 4) aufstehenden Fahrzeug mittels der Positioniermittel (7) eine Verschiebung der Prüfstandsteile der zugeordneten Schwimmplatten (1, 2, 3, 4) erfolgt, soweit diese nicht geklemmt sind, wobei eine Erfassung und Bewertung der Kraft erfolgt, die zur Bewegung der Prüfstandsteile der zugeordneten Schwimmplatten (1, 2, 3, 4) in der gelösten Betriebsstellung erforderlich ist und/oder eine Erfassung und Bewertung einer mit dieser Kraft korrelierenden Größe.

4. Verfahren zur Funktionsprüfung von Schwimmplatten (1, 2, 3, 4) als Bestandteil eines Prüfstandes für Prüf-, Mess- und/oder Einstellarbeiten an einem Fahrzeug, wobei die Schwimmplatten (1, 2, 3, 4) jeweils ein fahrzeugbezogenes Radaufstandsteil aufweisen, das in einer gelösten Betriebsstellung der Schwimmplatte (1, 2, 3, 4) gegenüber einem Prüfstandteil der jeweiligen Schwimmplatte (1, 2, 3, 4) in der horizontalen Ebene (X, Y) beweglich ist und das in einer geklemmten Betriebsstellung der Schwimmplatte (1, 2, 3, 4) mit dem Prüfstandteil der jeweiligen Schwimmplatte (1, 2, 3, 4) starr verbunden ist bezogen auf eine Bewegung in der horizontalen Ebene (X, Y), wobei weiterhin Positioniermittel (7) vorhanden sind zur Verschiebung der Prüfstandsteile von einer oder mehreren Schwimmplatten (1, 2, 3, 4),
   **dadurch gekennzeichnet, dass** bei geklemmter Betriebsstellung von wenigstens einer Schwimmplatte (1, 2, 3, 4) eine Verschiebung des Prüfstandsteils dieser wenigstens einen Schwimmplatte (1, 2, 3, 4) mittels der Positioniermittel (7) erfolgt, wobei die übrigen Schwimmplatten (1, 2, 3, 4) in der gelösten Betriebsstellung sind, wobei die Prüfstandsteile der Schwimmplatten in der gelösten Betriebsstellung im Prüfstand ortsfest gehalten werden, wobei die Verschiebung des Prüfstandsteils der wenigstens einen Schwimmplatte in der geklemmten Betriebsstellung mittels der Positioniermittel (7) bei einem im Prüfstand auf den Schwimmplatten (1, 2, 3, 4) aufstehenden Fahrzeug erfolgt, wobei eine Erfassung und Bewertung der Kraft erfolgt, die zur Bewegung des Prüfstandsteils der wenigstens einen Schwimmplatte (1, 2, 3, 4) in der geklemmten Betriebsstellung mittels der Positioniermittel (7) erforderlich ist und/oder eine Erfassung und Bewertung einer mit dieser Kraft korrelierenden Größe.

5. Verfahren nach Anspruch 3 und/oder 4 in weiterer Rückbeziehung auf Anspruch 1 oder Anspruch 2,
   **dadurch gekennzeichnet, dass** das Ergebnis einer Funktionsprüfung von Schwimmplatten nach dem Verfahren gemäß Anspruch 3 und/oder 4 verwendet wird, um in einer kombinierten Auswertung mit einer Funktionsprüfung gemäß Anspruch 1 oder 2 unter Verwendung der Ergebnisse der Funktionsprüfungen nach Anspruch 3 und/oder 4 Bewertungen für die Schwimmplatten abzuleiten, deren Funktion bei den Funktionsprüfungen gemäß Anspruch 3 oder 4 nur in einer gemeinsamen Betrachtung mehrerer Schwimmplatten bewertet wurde.

6. Verfahren nach einem der Ansprüche 1 bis 5,
   **dadurch gekennzeichnet, dass** die Einstellmittel (6) und/oder die Positioniermittel (7) einen oder mehrere elektromotorische Antriebe aufweisen, wobei die Erfassung der Kraft und/oder der mit dieser Kraft korrelierenden Größe erfolgt durch eine Messung der Leistungsdaten der elektromotorischen Antriebe und/oder der Energieaufnahme der elektromotorischen Antriebe in einem Zeitintervall.

7. Verfahren nach einem der Ansprüche 1 bis 5,
   **dadurch gekennzeichnet, dass** Kraftsensoren für die Messung der Kraft verwendet werden.

8. Verfahren nach einem der Ansprüche 1 bis 7,
   **dadurch gekennzeichnet, dass** bei der Bewertung der erfassten Kraft und/oder der mit dieser Kraft korrelierenden Größe das Fahrzeuggewicht (G) berücksichtigt wird.

9. Verfahren nach Anspruch 8,
   **dadurch gekennzeichnet, dass** das Fahrzeuggewicht (G) gemessen wird.

10. Verfahren nach Anspruch 8,
   **dadurch gekennzeichnet, dass** der Wert des Fahrzeuggewichts (G) vorgegeben wird.

11. Verfahren nach Anspruch 8,
   **dadurch gekennzeichnet, dass** bei einem Prüfstand im Neuzustand und/oder bei einem erstmalig auf dem Fahrzeugprüfstand geprüften Fahrzeugtyp die erfasste Kraft und/oder die mit dieser Kraft korrelierende Größe als Referenzwert gespeichert wird für die Kombination des Prüfstand mit dem Fahrzeugtyp und dass dieser Referenzwert für die Bewertung künftiger erfasster Kräfte und/oder mit diesen Kräften korrelierenden Größen bei derselben Kombination des Prüfstandes mit demselben Fahrzeugtyp als Referenzwert verwendet wird.

12. Verfahren nach einem der Ansprüche 1 bis 11,

**dadurch gekennzeichnet, dass** eine Erfassung und Bewertung der Kraft oder einer mit dieser Kraft korrelierenden Größe erfolgt, indem der Signalverlauf erfasst und bewertet wird derart, dass beim Auftreten eines Peaks im Signalverlauf bei einer Steigerung der Kraft bis zum Beginn der Bewegung des Fahrzeugs und/oder bis zum Beginn der Bewegung des oder der Prüfstandteile der Schwimmplatten auf eine Funktionsstörung geschlossen wird.

**Claims**

1. Method for the functional testing of floating plates (1, 2, 3, 4) as parts of a test bench for testing, measuring and / or adjusting work on a vehicle, wherein the floating plates (1, 2, 3, 4) each have a vehicle-related wheel tread part, which is movable in the horizontal plan (X,Y) relative to a test bench part of the respective floating plate (1, 2, 3, 4) in a dissolved operating position of the floating plate (1, 2, 3, 4) and which is rigidly connected to the test bench part of the respective floating plate (1, 2, 3, 4) related to a movement in the horizontal plane (X, Y) in a clamped operating position of the floating plate (1, 2, 3, 4),
   **characterized in that** in the dissolved operating position of all floating plates (1, 2, 3, 4) and a vehicle being positioned in a test bench on the floating plates (1, 2, 3, 4), the vehicle including the vehicle-related wheel tread parts of the floating plates (1, 2, 3, 4) are moved by means of adjustment means (6) with a detection and evaluation of the force required for the movement of the vehicle together with the vehicle-related wheel tread parts of the floating plates (1, 2, 3, 4) and / or a detection and evaluation of a parameter correlated with this force.

2. A method according to claim 1,
   **characterized in that** the detection and evaluation of the force and/or the parameter correlated to this force at a movement of the vehicle together with the vehicle-related wheel tread parts of the floating plates (1, 2, 3, 4) by means of the adjustment means (6) is done at several different settings of distances of the test bench parts of the front and the rear vehicle wheels associated floating plates (1, 2, 3, 4) with respect to the wheelbase (X).

3. Method for the functional testing of floating plates (1, 2, 3, 4) as parts of a test bench for testing, measuring and / or adjusting work on a vehicle, wherein the floating plates (1, 2, 3, 4) each have a vehicle-related wheel tread part, which is movable in the horizontal plan (X,Y) relative to a test bench part of the respective floating plate (1, 2, 3, 4) in a dissolved operating position of the floating plate (1, 2, 3, 4) and which is rigidly connected to the test bench part of the respective floating plate (1, 2, 3, 4) related to a movement in the horizontal plane (X, Y) in a clamped operating position of the floating plate (1, 2, 3, 4), wherein further positioning means (7) are provided for displacement of the test bench part of one or more floating plates (1, 2, 3, 4)
   **characterized in that** in the clamped operating position of at least one of the floating plates (1, 2, 3, 4), the test bench part of this floating plate (1, 2, 3, 4) is also stationarily positioned relative to the test bench, whereby in the dissolved operating position of the other floating plates (1, 2, 3, 4) and a vehicle being positioned in the test bench on the floating plates (1, 2, 3, 4) a displacement of the test bench parts of the floating plates (1, 2, 3, 4), which aren't in the clamped operating position, is initiated via the positioning means (7), with a detection and evaluation of the force required for the displacement of the test bench parts of the floating plates (1, 2, 3, 4) in the dissolved operating position and / or with a detection and evaluation of a parameter correlated with this force.

4. Method for the functional testing of floating plates (1, 2, 3, 4) as parts of a test bench for testing, measuring and / or adjusting work on a vehicle, wherein the floating plates (1, 2, 3, 4) each have a vehicle-related wheel tread part, which is movable in the horizontal plan (X,Y) relative to a test bench part of the respective floating plate (1, 2, 3, 4) in a dissolved operating position of the floating plate (1, 2, 3, 4) and which is rigidly connected to the test bench part of the respective floating plate (1, 2, 3, 4) with respect to a movement in the horizontal plane (X, Y) in a clamped operating position of the floating plate (1, 2, 3, 4), wherein further positioning means (7) are provided for displacement of the test bench parts of one or more floating plates (1, 2, 3, 4),
   **characterized in that** in the clamped operating position of at least one floating plate (1, 2, 3, 4) a displacement of the test bench part of at least one floating plate (1, 2, 3, 4) is initiated by the positioning (7) means, wherein the remaining floating plates (1, 2, 3, 4) are in the dissolved operating position, wherein the test bench parts of the floating plates in the dissolved operating position are held stationary in the test bench, wherein the displacement of the test bench part of the at least one floating plate in the clamped operating position initiated by the positioning means (7) takes place with vehicle being positioned on the floating plates (1, 2, 3, 4) in the test bench, with a detection and evaluation of the force required for the displacement of the at least one floating plate (1, 2, 3, 4) in the clamped operating position by the positioning means (7) and / or a detection and evaluation of a parameter correlated with this force.

5. Method according to claim 3 and / or 4 in further relation to claim 1 or claim 2,
**characterized in that** the result of a function test of floating plates according to the method according to claim 3 and / or 4 is used to perform a combined evaluation with a functional test according to claim 1 or claim 2 furthermore using the results of the functional tests according to claim 3 and / or 4 to derive ratings for the floating plates whose function was evaluated in the functional tests according to claim 3 or 4 only in a joint consideration of several floating plates.

6. Method according to one of claims 1 to 5,
**characterized in that** the adjusting means (6) and / or the positioning means (7) comprise one or more electromotive drives, wherein the detection of the force and / or the parameter correlated with this force is measured via the electrical power of the electromotive drives and / or the energy consumption of the electromotive drives in a time interval.

7. Method according to one of claims 1 to 5,
**characterized in that** force sensors are used for measuring the force.

8. Method according to one of claims 1 to 7,
**characterized in that** the vehicle weight (G) is taken into account in the evaluation of the detected force and / or the parameter correlating with this force.

9. A method according to claim 8,
**characterized in that** the vehicle weight (G) is measured.

10. A method according to claim 8,
**characterized in that** the value of the vehicle weight (G) is specified.

11. Method according to claim 8,
**characterized in that** in a test bench in new condition and/or in the case of a vehicle type being tested for the first time on the vehicle test bench, the detected force and/or the parameter correlated with this force is stored as a reference value for the combination of the test bench with the vehicle type and that this reference value is used as reference value for the evaluation of future detected forces and/or parameters correlating with these forces for the same combination of the test bench with the same vehicle type.

12. Method according to one of claims 1 to 11,
**characterized by** a detection and evaluation of the force or a parameter correlated with this force via the detection and evaluation of the signal such that when a peak occurs in the signal during an increase of the force until the beginning of the movement of the vehicle and / or until the beginning of the movement of the test bench part or the test bench parts of the floating plates a malfunction is recognized.

**Revendications**

1. Procédé pour la vérification du fonctionnement des plaques flottantes (1, 2, 3, 4) en tant que partie intégrante d'un banc de contrôle pour des travaux de vérification, de mesure et / ou de réglage sur un véhicule, les plaques flottantes (1, 2, 3, 4) présentant chacune une partie d'appui pour les roues spécifique au véhicule qui, dans une position de fonctionnement libre de la plaque flottante (1, 2, 3, 4) par rapport à une partie du banc de contrôle de la plaque flottante correspondante (1, 2, 3, 4), est mobile dans le plan horizontal (X, Y) et qui, dans une position de fonctionnement bloquée de la plaque flottante (1, 2, 3, 4), est fermement fixée par rapport à un mouvement dans le plan horizontal (X, Y),
**caractérisé en ce qu'**en position de fonctionnement libre de toutes les plaques flottantes (1, 2, 3, 4) et avec un véhicule positionné sur les plaques flottantes (1, 2, 3, 4) dans le banc de contrôle, le véhicule est déplacé grâce à des moyens de réglage (6) avec toutes les parties d'appui pour les roues des plaques flottantes (1, 2, 3, 4) se rapportant au véhicule, la force nécessaire pour déplacer le véhicule avec toutes les parties d'appui pour les roues des plaques flottantes (1, 2, 3, 4) se rapportant au véhicule est mesurée et évaluée et / ou une force en corrélation avec cette force est mesurée et évaluée.

2. Procédé selon la revendication 1,
**caractérisé en ce que** la mesure et l'évaluation de la force et / ou de la force en corrélation avec cette force lors d'un déplacement du véhicule grâce à des moyens de réglage (6) avec les parties d'appui pour les roues des plaques flottantes (1, 2, 3, 4) se rapportant au véhicule a lieu avec plusieurs réglages différents des écarts entre les parties du banc de contrôle des plaques flottantes (1, 2, 3, 4) affectées aux roues avant et aux roues arrière du véhicule par rapport à l'empattement (X).

3. Procédé pour la vérification du fonctionnement des plaques flottantes (1, 2, 3, 4) en tant que partie intégrante d'un banc de contrôle pour des travaux de vérification, de mesure et / ou de réglage sur un véhicule, les plaques flottantes (1, 2, 3, 4) présentant chacune une partie d'appui pour les roues spécifique au véhicule qui, dans une position de fonctionnement libre de la plaque flottante (1, 2, 3, 4) par rapport à une partie du banc de contrôle de la plaque flottante correspondante (1, 2, 3, 4), est mobile dans le plan horizontal (X, Y) et qui, dans une position de fonctionnement bloquée de la plaque flottante (1, 2, 3, 4), est fermement fixée par rapport à un mouvement dans le plan horizontal (X, Y), des moyens de positionnement (7) étant en outre prévus afin de déplacer les parties du banc de contrôle d'une ou de plusieurs plaques flottantes (1, 2, 3, 4),
**caractérisé en ce qu'**en position de fonctionnement bloquée d'au moins une plaque flottante (1, 2, 3, 4) dont la partie du banc de contrôle est en outre positionnée de manière fixe par rapport au banc de contrôle et en position de fonctionnement libre des autres plaques flottantes (1, 2, 3, 4) et d'un véhicule positionné sur les plaques flottantes (1, 2, 3, 4) du banc de contrôle, les parties du banc de contrôle des plaques flottantes correspondantes (1, 2, 3, 4) sont déplacées à l'aide des moyens de positionnement (7) dans la mesure où elles ne sont pas bloquées, et la force nécessaire pour déplacer les parties du banc de contrôle des plaques flottantes correspondantes (1, 2, 3, 4) en position libre est mesurée et évaluée et / ou une force en corrélation avec cette force est mesurée et évaluée.

4. Procédé pour la vérification du fonctionnement des plaques flottantes (1, 2, 3, 4) en tant que partie intégrante d'un banc de contrôle pour des travaux de vérification, de mesure et / ou de réglage sur un véhicule, les plaques flottantes (1, 2, 3, 4) présentant chacune une partie d'appui pour les roues spécifique au véhicule qui, dans une position de fonctionnement libre de la plaque flottante (1, 2, 3, 4) par rapport à une partie du banc de contrôle de la plaque flottante correspondante (1, 2, 3, 4), est mobile dans le plan horizontal (X, Y) et qui, dans une position de fonctionnement bloquée de la plaque flottante (1, 2, 3, 4), est fermement fixée par rapport à un mouvement dans le plan horizontal (X, Y), des moyens de positionnement (7) étant en outre prévus afin de déplacer les parties du banc de contrôle d'une ou de plusieurs plaques flottantes (1, 2, 3, 4),
**caractérisé en ce qu'**en position de fonctionnement bloquée d'au moins une plaque flottante (1, 2, 3, 4), la partie du banc de contrôle de cette au moins une plaque flottantes (1, 2, 3, 4) est déplacée grâce aux moyens de positionnement (7), les autres plaques flottantes (1, 2, 3, 4) étant en position libre, les parties du banc de contrôle des plaques flottantes (1, 2, 3, 4) étant positionnées fixes dans le banc de contrôle en position libre, le déplacement grâce au moyens de positionnement (7) de la partie du banc de contrôle de la au moins une plaque flottante ayant lieu avec un véhicule placé sur les plaques flottantes (1, 2, 3, 4), la force nécessaire pour déplacer les parties du banc de contrôle de la au moins une plaque flottante correspondante (1, 2, 3, 4) en position bloquée est mesurée et évaluée et / ou une force en corrélation avec cette force est mesurée et évaluée.

5. Procédé selon la revendication 3 et / ou 4 en référence supplémentaire à la revendication 1 ou à la revendication 2,
**caractérisé en ce que** le résultat d'une vérification de fonctionnement des plaques flottantes selon la revendication 3 et / ou 4 est utilisé afin de déduire, dans une exploitation combinée avec une vérification de fonctionnement selon la revendication 1 ou selon la revendication 2, en utilisant des résultats des tests de fonctionnement selon la revendication 3 et / ou 4 évaluer les plaques flottantes, dont le fonctionnement n'a été évalué que dans le cadre d'une considération commune de plusieurs plaques flottantes.

6. Procédé selon l'une des revendications de 1 à 5,
**caractérisé en ce que** les moyens de réglage (6) et / ou les moyens de positionnement (7) comprennent un ou plusieurs moteurs électriques, la mesure de la force et / ou de la force en corrélation avec cette force étant effectuée en mesurant les données de puissance des moteurs électriques et / ou de la consommation d'énergie des moteurs électriques pendant un espace de temps donné.

7. Procédé selon l'une des revendications de 1 à 5,
**caractérisé en ce que** des capteurs de force sont utilisés pour la mesure de la force.

8. Procédé selon l'une des revendications de 1 à 7,
**caractérisé en ce que** le poids du véhicule (G) est pris en considération lors de l'évaluation de la force mesurée et / ou de la force en corrélation avec cette force.

**9.** Procédé selon la revendication 8,
**caractérisé en ce que** le poids du véhicule (G) est mesuré.

**10.** Procédé selon la revendication 8,
**caractérisé en ce que** la valeur du poids du véhicule (G) est prédéfinie à l'avance.

**11.** Procédé selon la revendication 8,
**caractérisé en ce que** pour un banc de contrôle à l'état neuf et / ou pour un type de véhicule faisant l'objet d'un contrôle pour la première fois sur le banc de contrôle, la force mesurée et / ou la force en corrélation avec cette force est enregistrée comme valeur de référence pour l'association entre le banc de contrôle et ce type de véhicule et que cette valeur de référence est utilisée comme valeur de référence pour l'évaluation dans le futur de forces mesurées et / ou de grandeurs en corrélation avec ces forces pour les mêmes associations entre le banc de contrôle et le même type de véhicule.

**12.** Procédé selon l'une des revendications de 1 à 11,
**caractérisé en ce que** la force ou une grandeur en corrélation avec cette force est mesurée et évaluée en enregistrant et évaluant l'évolution du signal de telle sorte qu'en cas d'apparition de pics dans l'évolution du signal lors de l'augmentation de la force avant le début du déplacement du véhicule et / ou avant le début du déplacement des parties du banc de contrôle des plaques flottantes, on en déduit un dysfonctionnement.

1

2

y

x

7

3

6

4

5

y

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2840408 C2
- DE 10217720 C1
- DE 10020450 A1
- DE 102009060304 A1
- DE 102014111192 A1
- DE 4203982 A1
- DE 19836711 A1
- WO 2009039575 A1